# EUROPÄISCHE PATENTANMELDUNG

(11) **EP 4 079 442 A1**
(43) Veröffentlichungstag der Anmeldung: **26.10.2022**
(21) Anmeldenummer: 21020226.3
(22) Anmeldetag: 21.04.2021
(51) Int. Cl.: B23K 20/12, B23K 20/227

(54) **VERFAHREN ZUR HERSTELLUNG EINER PLATTIERUNG SOWIE EIN DURCH DIESES VERFAHREN HERGESTELLTES ÜBERGANGSBAUTEIL MIT PLATTIERUNG**

(71) Anmelder: Linde GmbH, 82049 Pullach (DE)
(72) Erfinder: Wimmer, Georg, Tüßling (DE)
(74) Vertreter: Meilinger, Claudia Sabine

(57) **Zusammenfassung**

Die Erfindung betrifft ein Verfahren zur Herstellung einer Plattierung (1), die mindestens eine Schicht aufweist, auf einer Ebene (21) eines ersten Materialstücks (2) einer chemischen oder verfahrenstechnischen Anlage, wobei das erste Materialstück (2) ein erstes Material aufweist, wobei die mindestens eine Schicht ein zweites Material aufweist, wobei das erste Material und das zweite Material nicht durch Schmelzschweißen miteinander verbindbar sind, wobei die mindestens eine Schicht durch Aufreiben eines zweiten Materialstücks (3) aus dem zweiten Material durch Bewegen des zweiten Materialstücks (3) über die Ebene (21) des ersten Materialstücks (2) auf die Ebene (21) des ersten Materialstücks (2) aufgebracht wird, sowie ein durch dieses Verfahren hergestelltes Übergangsbauteil mit Plattierung.

## Beschreibung

Die Erfindung betrifft ein Verfahren zur Herstellung einer Plattierung, die mindestens eine Schicht aufweist, auf einer Ebene eines ersten Materialstücks einer chemischen oder verfahrenstechnischen Anlage, wobei das erste Materialstück ein erstes Material aufweist, wobei die mindestens eine Schicht ein zweites Material aufweist, wobei das erste Material und das zweite Material nicht durch Schmelzschweißen miteinander verbindbar sind, sowie eine durch dieses Verfahren hergestelltes Übergangsbauteil mit Plattierung.

### Stand der Technik

In zahlreichen Anwendungen, insbesondere kryogenen Anlagen, beispielsweise kryogenen Wärmetauschern zur Verflüssigung von Gasen oder kryogenen Behältern oder Kryopumpen ist es notwendig, z.B. zur Bereitstellung von Fluiddichtigkeit Bauteile, wie etwa Rohre, insbesondere aus unterschiedlichen Werkstoffen, miteinander zu verbinden, beispielsweise zu verschweißen.

Beispielsweise wird zur Verbindung eines Aluminiumrohres mit einem Stahlrohr ein Übergangsbauteil (engl. Transition Joint) verwendet, welches einen Aluminiumabschnitt, an dem das Aluminiumrohr befestigt, insbesondere verschweißt, werden kann, und einen Stahlabschnitt, an dem das Stahlrohr befestigt, insbesondere verschweißt, werden kann, aufweist. Um den Aluminiumabschnitt des Übergangsbauteils mit dem Stahlabschnitt des Übergangsbauteils fluiddicht zu verbinden, werden beispielsweise verschiedene Zwischenmaterialschichten aus Metall, beispielsweise aus Titan oder aus einer Titanlegierung, aus Kupfer, aus Nickel oder aus einer Kupfer-Nickel-Legierung, in mehreren Schritten mittels Sprengplattieren zwischen dem Aluminiumabschnitt und dem Stahlabschnitt angeordnet. Dieses Herstellungsverfahren ist einerseits sehr aufwendig, andererseits werden die Zwischenmaterialschichten aus Metall durch das Sprengplattieren physisch sehr beansprucht, wodurch die Zwischenmaterialschichten spröde oder brüchig werden können.

Insbesondere bei kryogenen Anlagen, bei denen das Übergangsbauteil von kryogenem Fluid durchströmt wird, kühlt das kryogene Fluid das Übergangsbauteil ab. Die Zwischenmaterialschichten werden somit ebenfalls abgekühlt und ziehen sich durch die Abkühlung zusammen. Aufgrund unterschiedlicher Wärmeausdehnungskoeffizienten der Materialien entstehen Kräfte zwischen den Schichten. Diese zusätzlichen Kräfte können dazu führen, dass die spröden Zwischenmaterialschichten beschädigt oder zerstört werden, wodurch das Übergangsbauteil undicht wird.

Darüber hinaus werden bei Wärmetauschern für kryogene Anwendungen, die beispielsweise in der Hybridbauweise aufgebaut sind, d.h. sie weisen beispielsweise Rohre aus Aluminium und einen Druckmantel aus hochlegiertem Stahl auf, Übergange von den Aluminiumrohren zum Druckmantel benötigt. Ein beispielhafter Übergang wird mittels Einwalzen der Aluminiumrohre in Rohrböden aus hochlegiertem Stahl erzeugt, wobei dieser Übergang keine haltbare Verbindung insbesondere bei thermischer Beanspruchung darstellt. Ferner können die Aluminiumrohre beispielsweise auch in Rohrböden aus Aluminium eingeschweißt werden, wobei der Rohrboden aus Aluminium mit einem Übergangsbauteil mit dem Druckmantel verbunden werden muss.

Ziel der vorliegenden Erfindung ist es, eine fluiddichte und feste Verbindung von derartigen in chemischen oder verfahrenstechnischen Anlagen verwendeten, nicht schweißbaren Materialien bereitzustellen.

### Offenbarung der Erfindung

Erfindungsgemäß werden ein Verfahren zur Herstellung einer Plattierung sowie ein Übergangsbauteil mit Plattierung mit den Merkmalen der jeweiligen unabhängigen Patentansprüche vorgeschlagen. Vorteilhafte Ausgestaltungen sind Gegenstand der Unteransprüche sowie der nachfolgenden Beschreibung.

Durch das erfindungsgemäße Verfahren kann eine Plattierung hergestellt werden, die mindestens eine Schicht aufweist. Die mindestens eine Schicht wird auf einer Ebene eines ersten Materialstücks einer chemischen oder verfahrenstechnischen Anlage aufgebracht. Das erste Materialstück weist ein erstes Material auf, wobei die mindestens eine Schicht ein zweites Material aufweist. Ferner sind das erste Material und das zweite Material nicht durch Schmelzschweißen miteinander verbindbar. Die mindestens eine Schicht wird durch Aufreiben eines zweiten Materialstücks aus dem zweiten Material durch Bewegen des zweiten Materialstücks über die Ebene des ersten Materials auf die Ebene des ersten Materialstücks aufgebracht.

Das zweite Material des zweiten Materialstücks schmilzt beim Aufreiben des zweiten Materialstücks auf der Ebene des ersten Materialstücks durch eine zwischen dem zweiten Materialstück und dem ersten Materialstück herrschende Reibung. Je schneller und fester das zweite Materialstück dabei über die Ebene des ersten Materials bewegt wird, desto höher ist eine durch die Reibung erzeugte Wärme. Das zweite Material verbleibt zunächst lokal auf einer Position, an der sich das zweite Materialstück und das erste Materialstück beim Aufreiben berühren, in geschmolzenem Zustand auf der Ebene des ersten Materialstücks. Beim Abkühlen erstarrt das zweite Material und verbindet sich dabei, beispielsweise durch Diffusion der Atome des geschmolzenen zweiten Materials zumindest in einen Grenzbereich des ersten Materialstücks, mit dem ersten Materialstück. Das erstarrte zweite Material bildet somit auf der Ebene des ersten Materialstücks die mindestens eine Schicht, die unlösbar mit dem ersten Materialstück verbunden ist.

Soll beispielsweise das erste Materialstück, das von einem Fachmann je nach Anwendung passend gewählt oder vorher passend hergestellt werden kann, mit einem dritten Materialstück verbunden werden, wobei das dritte Materialstück ebenfalls das zweite oder ein mit dem zweiten verschweißbares Material aufweist, kann das dritte Materialstück mit der Plattierung, z.B. durch Schmelzschweißen verbunden werden, so dass insgesamt eine feste fluiddichte Verbindung des dritten Materialstücks mit dem ersten Materialstück über die Plattierung gewährleistet wird. Die durch das erfindungsgemäße Verfahren hergestellte Plattierung ermöglicht somit im Vergleich zum Stand der Technik eine einfache und kostengünstige Verbindung des ersten Materialstücks mit dem dritten Materialstück.

Vorteilhafterweise wird das zweite Materialstück beim Aufreiben mit einer vorbestimmten Kraft, die das zweite Materialstück auf die Ebene des ersten Materialstücks drückt und die vom zu verreibenden Werkstoff und der Geometrie des zweiten Materialstücks, insbesondere dem Durchmesser des Stiftes aus dem zweiten Material, abhängt, aufgebracht. Je größer dabei die Kraft ist, mit der das zweite Materialstück auf das erste Materialstück gedrückt wird, desto größer ist die durch die Reibung erzeugte Wärme. Bevorzugt ist die Kraft zumindest in einem Bereich, in dem die durch die Reibung erzeugte Wärme ausreicht, um das zweite Material zu schmelzen. Die Kraft kann das zweite Materialstück dabei entlang einer Achse auf die Ebene des ersten Materialstücks drücken, wobei die Achse in einem beliebigen Winkel von über 0° bis 90° in Bezug auf die Ebene ausgerichtet ist. Während im Stand der Technik beispielsweise die Plattierung durch Sprengschweißen auf das erste Materialstück aufgebracht wird, wirkt hier auf das erste Materialstück nur die Kraft, mit der das zweite Materialstück auf die Ebene gedrückt wird, so dass im Vergleich zum Stand der Technik verhindert wird, dass das erste Materialstück verformt, beschädigt oder zumindest porös wird.

Vorteilhafterweise wird das zweite Materialstück durch die Kraft kontinuierlich oder pulsierend auf die Ebene des ersten Materialstücks aufgebracht. Wird das zweite Materialstück kontinuierlich auf die Ebene des ersten Materialstücks gedrückt, wird an einer Vielzahl von Positionen, die entlang der Bewegung des zweiten Materialstücks angeordnet sind, eine gleiche Menge an geschmolzenem zweitem Material aufgebracht. Die daraus resultierende Schicht weist die gleiche Schichtdicke auf. Wird dagegen das zweite Materialstück pulsierend, beispielsweise durch Anlegen einer Pulsierungsfrequenz, aufgebracht, wird an einer Vielzahl von Positionen, die entlang der Bewegung des zweiten Materialstücks angeordnet sind, eine unterschiedliche Menge an geschmolzenem zweiten Material aufgebracht. Die daraus resultierende Schicht weist entlang der Bewegung des zweiten Materialstücks unterschiedliche Schichtdicken, beispielsweise mit wellenförmiger Oberfläche, auf, wobei eine Amplitude der wellenförmigen Oberfläche einer Amplitude der angelegten Pulsierungsfrequenz entspricht. Es versteht sich, dass auch weitere Bewegungsmuster des zweiten Materialstücks über die Ebene des ersten Materialstücks angewendet werden können, beispielsweise kann während der Bewegung von einer kontinuierlichen Kraft auf eine pulsierende Kraft gewechselt werden. Vorteilhafterweise kann eine Dicke der mindestens einen Schicht durch die Kraft eingestellt werden. Je größer dabei die Kraft ist, mit der das zweite Materialstück auf das erste Materialstück gedrückt wird, desto größer ist die durch die Reibung erzeugte Wärme. Ferner wird der feste bzw. noch nicht geschmolzene Anteil des zweiten Materialstücks mit größerer Kraft schneller in Richtung des ersten Materialstücks gedrückt, beispielsweise durch Verdrängen des geschmolzenen Anteils des zweiten Materialstücks durch den festen bzw. noch nicht geschmolzenen Anteil bzw. durch die darauf wirkende Kraft, so dass der noch nicht geschmolzene Anteil das erste Materialstück schneller kontaktiert und schneller geschmolzen wird. Insgesamt wird dadurch die Menge an geschmolzenem zweitem Material lokal auf dem ersten Materialstück erhöht, so dass sich dadurch auch die Schichtdicke lokal erhöht.

Vorteilhafterweise wird das zweite Materialstück beim Aufreiben auf die Ebene des ersten Materialstücks um eine Rotationsachse des zweiten Materialstücks in Rotation versetzt. Dies erhöht die Reibung zwischen dem ersten Materialstück und dem zweiten Materialstück, so dass eine ausreichende Wärme, die zum gleichmäßigen Schmelzen des zweiten Materialstücks verwendet wird, bereitgestellt wird.

Wird das zweite Materialstück beispielsweise von oben auf das erste Materialstück abgesenkt und über das erste Materialstück bewegt, könnte das zweite Materialstück ungleichmäßig geschmolzen werden, da beispielsweise eine Vorderseite, d.h. die Seite des zweiten Materialstücks, die in Bewegungsrichtung zeigt, einer größeren Reibung ausgesetzt ist als eine Rückseite, d.h. die Seite des zweiten Materialstücks, die in eine Richtung entgegengesetzt zur Bewegungsrichtung zeigt. Durch das ungleichmäßige Schmelzen könnte an einem Kontaktbereich zwischen dem zweiten Materialstück und dem ersten Materialstück eine Abschrägung entstehen, so dass eine Länge des zweiten Materialstücks an der Rückseite größer als eine Länge des zweiten Materialstücks an der Vorderseite ist. Diese Abschrägung könnte insbesondere bei einer Bewegung mit pulsierender Kraft dazu führen, dass sich bei einem Zubewegen des zweiten Materialstücks auf das erste Materialstück die Abschrägung in das erste Materialstück sticht bzw. eindringt und das erste Materialstück dadurch beschädigt. Darüber hinaus besteht mit zunehmender Kraft die Gefahr, dass das zweite Materialstück tiefer in das erste Materialstück eindringt und sogar stecken bleibt, so dass die Bewegung des zweiten Materialstücks über das erste Materialstück verhindert wird und das Verfahren zur Herstellung der Plattierung unterbrochen bzw. abgebrochen wird. Durch die Rotation des zweiten Materialstücks um die Rotationsachse wird ein ungleichmäßiges Schmelzen des zweiten Materialstücks verhindert und so ein präzises Aufbringen der mindestens einen Schicht auf das erste Materialstück gewährleistet.

Vorteilhafterweise wird die Rotationsachse des zweiten Materialstücks in einem Winkel zu der Ebene angeordnet. Durch den Winkel zwischen Rotationsachse und der Ebene kann eine Größe des Kontaktbereichs zwischen dem zweiten Materialstück und der Ebene des ersten Materialstücks eingestellt werden. Da auf den Kontaktbereich die durch die Reibung erzeugte Wärme wirkt, kann somit auch eingestellt werden, wie viel des zweiten Materialstücks bei der aktuell herrschenden Wärme schmilzt und so ebenfalls die Menge des auf die Ebene aufgebrachten geschmolzenen zweiten Materials eingestellt werden. Dies ermöglicht darüber hinaus, dass die Dicke der Schicht präzise eingestellt werden kann.

Vorteilhafterweise wird als Winkel ein Winkel größer 0° bis 90°, bevorzugt 90° eingestellt. Je größer dabei der Winkel ist, desto größer ist der Kontaktbereich zwischen dem zweiten Materialstück und dem ersten Materialstück. Ein Winkel von 90° führt somit dazu, dass der Kontaktbereich zwischen dem zweiten Materialstück und dem ersten Materialstück maximal ist, so dass einerseits das zweite Materialstück entlang des Kontaktbereichs gleichmäßig geschmolzen wird und andererseits eine maximale Fläche der Ebene des ersten Materialstücks von dem geschmolzenen zweiten Material bedeckt werden kann. Dies ermöglicht somit eine schnelle Bildung der Plattierung auf dem ersten Materialstück, ohne dass das zweite Materialstück unnötig oft über das erste Materialstück bewegt werden muss. Es ist jedoch auch möglich, den Winkel zu variieren, wenn die Plattierung beispielsweise nur in einem bestimmten Bereich auf der Ebene des ersten Materialstücks gebildet werden soll, so dass der Winkel je nach Anwendungsfall in gewünschter Weise durch einen Fachmann gewählt und eingestellt werden kann.

Vorteilhafterweise wird das zweite Materialstück linear oder bogenförmig über die Ebene des ersten Materialstücks bewegt. Wird das zweite Materialstück linear über die Ebene bewegt, entsteht entlang der Bewegung des zweiten Materialstücks eine lineare Plattierung. Das zweite Materialstück kann anschließend zur ersten Seite zurückbewegt werden, wobei das zweite Materialstück das erste Materialstück dabei nicht kontaktiert, und erneut in Richtung der zweiten Ebene über die Ebene bewegt werden. Ferner ist auch möglich, das zweite Materialstück von der ersten Seite in Richtung der zweiten Seite und anschließend von der zweiten Seite in Richtung der ersten Seite zu bewegen, wobei das zweite Materialstück das erste Materialstück durchgehend kontaktiert. Auch andere Bewegungsmuster, etwa mäanderförmig, sind möglich.

Bei der erneuten Bewegung des zweiten Materialstücks über die Ebene des ersten Materialstücks entsteht eine zweite lineare Plattierung, die sich mit der ersten linearen Plattierung verbinden kann. Alternativ kann der Abstand der zweiten linearen Plattierung von der ersten linearen Plattierung derart gewählt bzw. eingestellt werden, dass zwei separate lineare Plattierungen nebeneinander angeordnet werden können. Wird eine Vielzahl linearer Plattierungen auf die Ebene des ersten Materialstücks aufgebracht, können diese derart angeordnet werden, dass diese vollständig miteinander verbunden sind, nur ein Teil der linearen Plattierungen miteinander verbunden ist, z.B. jeweils zwei, drei oder eine beliebige Anzahl linearer Plattierungen miteinander verbunden sind, wobei zwischen den verbundenen linearen Plattierungen eine, zwei oder eine Vielzahl separater linearer Plattierungen angeordnet sind, oder jede lineare Plattierung derart angeordnet ist, dass jede dieser von einer anderen linearen Plattierung getrennt ist.

Wird das zweite Materialstück bogenförmig über das erste Materialstück bewegt, dies kann eine kreisförmige Bewegung, eine spiralförmige Bewegung oder eine andere beliebige bogenförmige Bewegung umfassen, entsteht eine bogenförmige Plattierung, die als separate bogenförmige Plattierung ausgebildet ist. Darüber ist auch möglich, einige der Vielzahl nebeneinander angeordneter bogenförmiger Plattierungen miteinander zu verbinden oder die Vielzahl bogenförmiger Plattierungen vollständig miteinander zu verbinden.

Vorteilhafterweise wird die lineare oder bogenförmige Bewegung des zweiten Materialstücks mit einer Pendelbewegung oder einer oszillierenden Bewegung in der Ebene überlagert. Durch die Pendelbewegung bzw. die oszillierende Bewegung wird das zweite Materialstück während der linearen oder bogenförmigen Bewegung zusätzlich innerhalb der Ebene bewegt. Die daraus resultierende Plattierung verläuft beispielsweise mäanderförmig oder zickzackförmig entlang der (Haupt-)Bewegung und kann in ihrer Form sehr präzise gestaltet und von einem Fachmann an die jeweilige Anwendung angepasst werden. Da die auf der Ebene angeordnete Plattierung beispielsweise dazu dienen soll, das erste Materialstück mit dem dritten Materialstück, das das zweite oder ein mit dem zweiten verschweißbares Material aufweist, zu verbinden, kann die vollständig auf der Ebene des ersten Materialstücks angeordnete Plattierung verwendet werden um beispielsweise das erste Materialstück mittels Schmelzschweißen mit dem dritten Materialstück zu verbinden. Alternativ können auch Teil-Plattierungen verwendet werden, um das erste Materialstück mittels Schmelzschweißen mit dem dritten Materialstück zu verbinden. Durch Verwendung von Teil-Plattierungen kann somit zweites Material eingespart werden und gleichzeitig eine ausreichende Verbindung des ersten Materialstücks mit dem dritten Materialstück gewährleistet werden.

Vorteilhafterweise wird als erstes Materialstück eine Platte, eine Scheibe oder ein Ring verwendet.

Das erste Materialstück kann beispielsweise als Rohrboden eines Wärmetauschers oder in Coldboxen Verwendung finden.

Als Wärmetauscher sind hier insbesondere gewickelte Wärmetauscher oder Core-in-Shell-Wärmetauscher zu nennen. Ein Core-in-Shell-Wärmetauscher weist einen in einem Außenbehälter des Core-in-Shell-Wärmetauschers angeordneten Plattenwärmetauscher auf. Der Plattenwärmetauscher ist mit einer Zuleitung, über die Fluid in den Plattenwärmetauscher einleitbar ist, und mit einer Ableitung, über die Fluid aus dem Plattenwärmetauscher entnehmbar ist, versehen. Ferner ist mindestens ein erfindungsgemäßes Übergangsbauteil in der Zuleitung und/oder in der Ableitung des Plattenwärmetauschers angeordnet.

In einem Core-in-Shell-Wärmetauscher (auch als Block-in-Shell-, Block-in-Kettle- oder Platten- und Shell-Wärmetauscher bezeichnet; die Begriffe sind gleichbedeutend) ist mindestens ein Plattenwärmetauscher, der sogenannte "Core", in einem Außenbehälter, auch "Shell" genannt, angeordnet. Der Core-in-Shell-Wärmetauscher dient dazu, eine indirekte Wärmeübertragung von beispielsweise einem gasförmigen Fluid auf ein flüssiges Fluid zu realisieren. Das gasförmige Fluid wird dabei beispielsweise von außen über die erste Zuleitung in den Plattenwärmetauscher eingeleitet, während das flüssige Fluid derart im Außenbehälter bereitgestellt wird, dass das flüssige Fluid den Plattenwärmetauscher umgibt. An den Platten des Plattenwärmetauschers findet der indirekte Wärmekontakt statt, wobei das gasförmige Fluid abgekühlt und verflüssigt und das flüssige Fluid zumindest teilweise in den gasförmigen Aggregatszustand überführt wird. Core-in-Shell-Wärmetauscher eignen sich jedoch auch für andere Arten der Wärmeübertragung.

Der Plattenwärmetauscher ist zumindest teilweise aus dem erwähnten zweiten Material gebildet, das sich nicht mit einem typischerweise für den überwiegenden Anteil der Rohrleitung verwendeten ersten Material verschweißen lässt. Die Zuleitung und/oder die Ableitung weist daher vorteilhafterweise eine erste Verrohrung aus dem ersten Material und eine zweite Verrohrung aus dem zweiten Material auf, wobei das erste Material und das zweite Material nicht durch Schmelzschweißen verbindbar sind, Die zweite Verohrung ist einerseits mit dem Plattenwärmetauscher und andererseits mit dem erfindungsgemäßen Übergangsbauteil verbunden, wobei das Übergangsbauteil dazu dient, die erste Verrohrung mit der zweiten Verrohrung zu verbinden.

Da die zweite Verrohrung und der Plattenwärmetauscher aus demselben Material gebildet sind, können diese beispielsweise durch Verschweißen miteinander verbunden werden. Diese Verbindung ist fluiddicht und sorgt dafür, dass das Fluid, das in den Plattenwärmetauscher geleitet werden soll, in den Plattenwärmetauscher gelangt, und nicht vorher in den Außenbehälter des Core-in-Shell-Wärmetauschers strömt. Ferner stellt auch das Übergangsbauteil sicher, dass die Verbindung zwischen erster Verrohrung und zweiter Verrohrung fluiddicht ist.

Auch hier ist das erste Material Stahl oder rostfreier Stahl und das zweite Material Aluminium oder eine Aluminiumlegierung. Der Plattenwärmetauscher ist somit insbesondere aus Aluminium gebildet. Dies ist von Vorteil, da Aluminium eine hohe Wärmeleitfähigkeit aufweist und so die Wärme zwischen den beiden Fluiden gut leiten kann. Ferner kann der Plattenwärmetauscher beispielsweise durch Hartlöten leicht hergestellt werden.

Ein Beispiel eines Einsatzes eines erfindungsgemäßen Übergangsbauteils in einem gewickelten Wärmetauscher findet sich weiter unten in den Ausführungsbeispielen. Weiterhin weist beispielsweise eine Coldbox eine Verrohrung auf, die mindestens ein erfindungsgemäßes Übergangsbauteil enthält.

Bei Coldboxen handelt es sich um temperaturisolierende Einhausungen, in denen bei tiefen, insbesondere kryogenen Temperaturen betriebene verfahrenstechnische Apparate installiert sind. Eine verfahrenstechnische Anlage kann eine oder mehrere entsprechende Coldboxen umfassen und insbesondere modular aus entsprechenden Coldboxen erstellt werden. Verfahrenstechnische Anlagen, die mit Coldboxen ausgestattet sind, sind beispielsweise Anlagen zur Luftzerlegung oder Anlagen zur Zerlegung von Synthesegas in seine Bestandteile Wasserstoff, Stickstoff und Kohlenmonoxid. In solchen Prozessen werden Temperaturen von -180 °C und weniger erreicht. Die Erfindung eignet sich für sämtliche Einsatzgebiete von Coldboxen und ist nicht auf diese Beispiele beschränkt. In einer Coldbox können auch mehrere Anlagenteile, also beispielsweise Trennapparate wie Kolonnen und die zugehörigen Wärmetauscher, zusammen mit der Verrohrung an einem tragenden Stahlrahmen befestigt werden, welcher außen mit Blechplatten verkleidet wird. Das Innere der auf diese Weise gebildeten Einhausung wird mit Isoliermaterial wie beispielsweise Perlit gefüllt, um einen Wärmeeintrag aus der Umgebung zu verhindern. Auch eine teilweise oder vollständige Vorfertigung von Coldboxen mit den entsprechenden Apparaten im Werk ist möglich, so dass diese auf der Baustelle bei Bedarf endgefertigt bzw. nur noch miteinander verbunden werden müssen. Zur Verbindung können temperaturisolierte und ggf. in Coldboxen untergebrachte Leitungsmodule verwendet werden. In typischen Coldboxen werden die Anlagenteile meist mit einem Mindestabstand zur Wand verbaut, um eine ausreichende Isolierung sicherzustellen.

Die Verrohrung in einer erfindungsgemäßen Coldbox wird vorzugsweise ohne Flanschverbindungen, d.h. vollständig verschweißt bzw. über mindestens ein erfindungsgemäßes Übergangsbauteil, ausgeführt, um die Entstehung von Undichtigkeiten zu vermeiden. Aufgrund der auftretenden Temperaturunterschiede können in der Verrohrung Dehnungsbögen vorhanden sein. Wartungsanfällige Bauteile werden typischerweise nicht in der Coldbox angeordnet, so dass das Innere der Coldbox vorteilhafterweise wartungsfrei ist. Ventile können beispielsweise als sogenannte Eckventile ausgeführt sein, um eine Reparatur von außerhalb zu ermöglichen. Dabei sitzt das Ventil in der Coldboxwand; die Rohrleitung wird zum Ventil und wieder zurückgeführt. Rohrleitungen und Apparate werden normalerweise in Aluminium ausgeführt, bei sehr hohen Betriebsdrücken kommt auch Edelstahl zum Einsatz. Das erfindungsgemäße Übergangsbauteil macht eine Verbindung dieser Materialien möglich. Der Anstrich der Coldbox wird sehr häufig in weiß, aber auch in anderen hellen Farben ausgeführt. Ein Eindringen von Feuchtigkeit aus der Umgebungsluft, die an den kalten Anlagenteilen gefrieren würde, kann durch eine kontinuierliche Spülung der Coldbox mit z.B. Stickstoff verhindert werden.

Die als erstes Materialstück verwendete Platte oder Scheibe weist das erste Material auf und wird mit der mindestens einen Schicht der Plattierung aus zweitem Material plattiert. Das zweite Materialstück kann dazu beispielsweise linear oder bogenförmig über die Ebene der Platte oder Scheibe bewegt werden. Ferner ist möglich, die Platte oder Scheibe vollständig zu plattieren oder nur einen Abschnitt oder Abschnitte der Platte oder Scheibe zu plattieren. Die Plattierung auf der Platte oder Scheibe kann mit einem Bauteil, das das zweite oder ein mit dem zweiten verschweißbares Material aufweist, beispielsweise durch Schmelzschweißen, verbunden werden. Dabei kann das Bauteil direkt auf die Plattierung aufgesetzt werden oder aber von der anderen Seite der Platte/Scheibe durch ein Loch in der Platte/Scheibe zur Plattierungsseite geführt und dort mit der Plattierung artgleich verschweißt werden (vgl. Ausführungsbeispiel eines Rohrbodens für Wärmetauscher unten).

Ein derartiger Rohrboden zeichnet sich dadurch aus, dass die Verbindung eines jeden Rohres (Bauteil aus dem zweiten Material) mit dem Rohrboden (Platte aus dem ersten Material) sowie die Verbindung des Rohrbodens mit dem Druckmantel eines Wärmetauschers fluiddicht und gegenüber thermischen Einflüssen stabiler ist als andere aus dem Stand der Technik bekannte Rohrböden, bei denen beispielsweise Rohre aus einem zweiten Material in eine Platte oder Scheibe aus einem ersten Material eingewalzt werden, so dass hier keine zuverlässig haltbare Verbindung entsteht, die ferner auf Grund der unterschiedlichen Wärmeausdehnungskoeffizienten zwischen erstem Material und zweitem Material leichter zerstört oder gelöst werden kann.

Auch werden aus dem Stand der Technik bekannte Rohrböden, die beispielsweise durch Sprengplattierung plattiert werden, bei der Herstellung durch die bei der Sprengplattierung wirkenden Kräfte deutlich stärker beansprucht, so dass das Material im Betrieb des Wärmetauschers bei der Einwirkung von verahrenstechnisch bedingten höheren Kräften undicht werden kann. Im Vergleich dazu wirkt auf die Platte oder Scheibe, also das erste Materialstück, gemäß der vorliegenden Erfindung nur die Kraft, mit der das zweite Materialstück auf die Platte oder Scheibe gedrückt wird, so dass das erste Materialstück beim Plattieren deutlich weniger beansprucht wird, so dass keine Materialspannungen oder Porositäten beim Plattieren induziert werden. Dies führt dazu, dass die Verbindung des Rohrbodens mit dem Rohr gegenüber thermischen Einflüssen stabiler ist als aus dem Stand der Technik bekannte Rohrböden.

Ein als erstes Materialstück ausgeführter Ring kann beispielsweise ein Teil eines Übergangsbauteils sein, wobei das Übergangsbauteil dazu dienen soll, ein Bauteil, das das erste Material aufweist, mit einem Bauteil, das das zweite oder ein mit dem zweiten verschweißbares Material aufweist, zu verbinden. Dazu wird der Ring aus dem ersten Material mit der mindestens einen Schicht der Plattierung aus zweitem Material plattiert. Dazu kann das zweite Materialstück in Umfangsrichtung entlang des Rings oder in radialer Richtung senkrecht zur Umfangsrichtung über den Ring bewegt werden, so dass der Ring plattiert wird.

Das daraus resultierende Übergangsbauteil weist auf einer Seite den Ring aus erstem Material und auf einer anderen Seite die Plattierung aus zweitem Material auf, so dass der Ring mit einem Bauteil, z.B. Rohr, aus erstem Material, und die Plattierung mit einem Bauteil, z.B. Rohr, aus zweitem Material, beispielsweise mittels Schmelzschweißen, verbunden werden kann. Das Bauteil aus erstem Material ist durch das Übergangsbauteil fest und fluiddicht mit dem Bauteil aus zweitem Material verbunden. So kann beispielsweise kryogenes Fluid von dem einen Rohr aus erstem Material über das Übergangsbauteil in das andere Rohr aus zweitem Material geleitet werden.

Vorteilhafterweise wird als zweites Materialstück ein Stift oder ein Stab verwendet. Das zweite Materialstück kann so leicht um eine Rotationsachse gedreht werden. Ferner weist der Stift bzw. Stab einen im Vergleich zu seiner Längserstreckung geringen Querschnitt senkrecht zur Rotationsachse auf. Der geringe Querschnitt führt dazu, dass gewährleistet wird, dass das zweite Materialstück möglichst gleichmäßig über den gesamten Querschnitt geschmolzen wird, während das zweite Materialstück über die Ebene des ersten Materialstücks bewegt wird. Darüber hinaus ermöglicht der geringe Querschnitt eine präzise Positionierung des geschmolzenen zweiten Materials auf der Ebene.

Vorteilhafterweise wird als erstes Material Stahl oder Edelstahl verwendet. Stahl oder Edelstahl ist ein bekanntes Material, das in kryogenen Anlagen, z.B. in Form von Stahlrohren oder in Form eines Druckmantels eines Wärmetauschers, verwendet wird. Dadurch kann das erste Materialstück des Übergangsbauteils beispielsweise mit Stahlrohren einer kryogenen Anlage oder das erste Materialstück bzw. der Rohrboden mit dem Druckmantel eines Wärmetauschers beispielsweise durch Schmelzschweißen einfach und fluiddicht verbunden werden.

Vorteilhafterweise wird als zweites Material Aluminium oder eine Aluminiumlegierung verwendet. Aluminium ist ebenfalls ein bekanntes Material, das in kryogenen Anlagen in Form von Aluminiumrohren verwendet wird. Auch hier ist dies von Vorteil, da die Plattierung auf dem Übergangsbauteil oder auf dem Rohrboden einfach und fluiddicht mit einem Aluminiumrohr, beispielsweise ebenfalls durch Schmelzschweißen, verbunden werden kann.

Gegenstand der Erfindung ist ferner ein Übergangsbauteil mit einem ersten Materialstück und einer Plattierung, die mindestens eine Schicht aufweist, auf einer Ebene des ersten Materialstücks, welches Bestandteil einer chemischen oder verfahrenstechnischen Anlage ist. Das erste Materialstück weist ein erstes Material und die mindestens eine Schicht ein zweites Material auf, wobei das erste Material und das zweite Material nicht durch Schmelzschweißen miteinander verbindbar sind. Die mindestens eine Schicht ist nach einem oben beschriebenen Verfahren auf der Ebene des ersten Materialstücks aufgebracht und weist die oben beschriebenen Vorteile gegenüber dem Stand der Technik auf, so dass auf eine erneute Beschreibung verzichtet wird.

Weiterhin ist ein Rohrboden, insbesondere für einen gewickelten Wärmetauscher, mit einem solchen erfindungsgemäßen Übergangsbauteil Gegenstand der Erfindung.

Bei einem solchen Rohrboden kann - wie bereits oben geschildert - mindestens ein Rohr aus dem zweiten Material oder mit dem zweiten Material verschweißbar mit der mindestens einen Plattierungsschicht aus dem zweiten Material verbunden, insbesondere verschweißt werden. Dies führt dazu, dass das mindestens eine Rohr fest mit der mindestens einen Schicht und über die mindestens eine Schicht fest mit dem ersten Materialstück verbunden ist.

Das Übergangsbauteil kann beispielsweise auch in einen Druckmantel des gewickelten Wärmetauschers integriert werden und sorgt so für eine fluiddichte Verbindung von einem Rohr, aus dem kryogenes Fluid in den Wärmetauscher geleitet werden soll, in das Innere des Wärmetauschers.

Weitere Vorteile und Ausgestaltungen der Erfindung ergeben sich aus der Beschreibung und den beiliegenden Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in den Zeichnungen schematisch dargestellt und wird im Folgenden unter Bezugnahme auf die Zeichnungen beschrieben.

### Figurenbeschreibung

Figur 1 zeigt schematisch eine Ausführungsform eines erfindungsgemäßen Verfahrens zur Herstellung einer erfindungsgemäßen Plattierung.
Figur 2 zeigt schematisch eine weitere Ausführungsform eines erfindungsgemäßen Verfahrens zur Herstellung der erfindungsgemäßen Plattierung.
Figur 3 zeigt schematisch eine Herstellung eines Übergangsbauteils mit erfindungsgemäßer Plattierung.
Figur 4 zeigt schematisch eine Herstellung einer Platte mit erfindungsgemäßer Plattierung.
Figur 5 zeigt schematisch ein erfindungsgemäßes Übergangsbauteil.
Figur 6 zeigt schematisch einen gewickelten Wärmetauscher mit erfindungsgemäßem Übergangsbauteil.

Identische Bezugszeichen in den Figuren bezeichnen gleiche oder baugleiche Elemente und werden nicht jedes Mal gesondert erläutert.

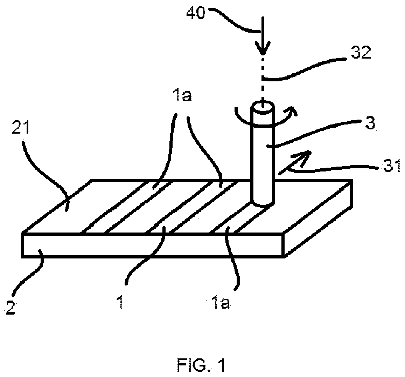

In Figur 1 ist schematisch eine Ausführungsform eines erfindungsgemäßen Verfahrens zur Herstellung einer erfindungsgemäßen Plattierung 1 gezeigt. Bei dem Verfahren wird eine Plattierung 1, die ein zweites Material, hier Aluminium, aufweist, auf ein erstes Materialstück 2, das ein erstes Material, hier Stahl, aufweist, aufgebracht.

Das erste Materialstück 2 ist hier eine quaderförmige Platte und weist eine Ebene 21 auf, wobei die Ebene 21 sich in eine Längs- und eine Querrichtung des ersten Materialstücks 1 erstreckt. Das erste Materialstück 1 kann von einem Fachmann je nach Anwendung passend gewählt oder vorher passend hergestellt werden. Die Plattierung 1 wird auf die Ebene 21 aufgebracht, in dem ein zweites Materialstück 3 aus Aluminium entlang der Querrichtung der Ebene 21 über die Ebene 21 in eine Richtung, d.h. in eine Bewegungsrichtung (siehe Pfeil 31), bewegt wird. Das zweite Materialstück 3 weist eine Stab- bzw. Stiftform auf, und umfasst eine Rotationsachse 32. Während der Bewegung über die Ebene 21 wird das zweite Materialstück 3 zusätzlich mit einer kontinuierlichen Kraft 40 entlang der Rotationsachse 32 auf die Ebene 21 gedrückt. Die Rotationsachse 32 ist hier derart eingestellt, dass ein Winkel von 90° zwischen der Rotationsachse 32 und der Ebene 21 aufgespannt wird. Durch die Kraft 40 und der Bewegung des zweiten Materialstücks 3 über die Ebene 21 des ersten Materialstücks 2 entsteht an einem Kontaktbereich zwischen dem ersten Materialstück 2 und dem zweiten Materialstück 3 eine Reibung. Diese Reibung erzeugt eine Wärme, die ausreicht, um das zweite Materialstück 3 bzw. das Aluminium über den gesamten Kontaktbereich gleichmäßig zu schmelzen.

Wird die Kraft 40, mit der das zweite Materialstück 3 auf die Ebene 21 gedrückt wird, erhöht, wird beispielsweise Aluminium, das durch die bei der Reibung erzeugten Wärme zu schmelzen beginnt und dadurch weich wird, verdrängt. Dies führt dazu, dass festes Aluminium schneller in Richtung Kontaktbereich befördert bzw. nachgeliefert und ebenfalls weich bzw. geschmolzen wird. Somit wird die Menge an Aluminium auf der Ebene 21 erhöht, was dazu führt, dass die entstehende Schicht eine größere Schichtdicke aufweist. Alternativ ist möglich, das zweite Materialstück 3 mit einer pulsierenden Kraft auf die Ebene 21 des ersten Materialstücks 2 zu drücken, wodurch eine Plattierung entstehen würde, die eine wellenförmige Oberfläche aufweisen würde.

Es ist darüber hinaus auch möglich, die Rotationsachse 32 in einem Winkel zwischen größer 0° und 90° in Bezug auf die Ebene 21 anzuordnen. Je geringer der Winkel ist, desto geringer ist der Kontaktbereich zwischen dem ersten Materialstück 2 und dem zweiten Materialstück 3. Dies führt dazu, dass durch den geringeren Kontaktbereich weniger Aluminium geschmolzen und auf die Ebene aufgebracht wird, so dass durch Einstellen des Winkels die Schichtdicke der Plattierung 1 gesteuert werden kann.

Das geschmolzene Aluminium wird bei der Bewegung des zweiten Materialstücks 3 über die Ebene 21 auf die Ebene 21 aufgebracht, verbleibt zunächst in geschmolzenem Zustand auf der Ebene 21 und erstarrt beim Abkühlen, wobei eine feste Schicht der Plattierung 1 gebildet wird. Die Plattierung 1 ist fest mit dem ersten Materialstück 2 verbunden, da das Aluminium in geschmolzenem Zustand zumindest zum Teil in einen Grenzbereich des ersten Materialstücks 2 aus Stahl diffundieren und sich dort mit dem Stahl in Form einer Legierung verbinden kann. In dieser Ausführungsform umfasst die Plattierung 1 drei voneinander getrennte Teil-Plattierungen 1a. Das geschmolzene Aluminium kann jedoch auch derart auf die Ebene 21 aufgebracht werden, so dass eine einstückige Plattierung 1 aus Aluminium auf der Ebene 21 gebildet wird.

Um die Reibung noch zusätzlich zu erhöhen, kann das zweite Materialstück 3 ferner um die Rotationsachse 32 gedreht werden. Wird das zweite Materialstück 3 über das erste Materialstück 2 bewegt, könnte das zweite Materialstück 3 ungleichmäßig geschmolzen werden, da beispielsweise eine Vorderseite, d.h. die Seite des zweiten Materialstücks 4, die in Bewegungsrichtung 31 zeigt, einer größeren Reibung ausgesetzt ist als eine Rückseite, d.h. die Seite des zweiten Materialstücks 3, die in eine Richtung entgegengesetzt zur Bewegungsrichtung 31 zeigt. Durch das ungleichmäßige Schmelzen könnte an dem Kontaktbereich zwischen dem zweiten Materialstück 3 und dem ersten Materialstück 2 eine Abschrägung entstehen, so dass eine Länge des zweiten Materialstücks 3 an der Rückseite größer als eine Länge des zweiten Materialstücks 3 an der Vorderseite ist. Diese Abschrägung könnte, da das zweite Materialstück 3 durch die Kraft 40 auf das erste Materialstück gedrückt wird, dazu führen, dass das zweite Materialstück 3 mit der längeren Rückseite in das erste Materialstück 2 sticht bzw. in dieses eindringt. Dies würde dazu führen, dass das erste Materialstück 2 beschädigt wird oder das zweite Materialstück 2 in dem ersten Materialstück 2 stecken bleibt. Durch die Rotation des zweiten Materialstücks 3 um die Rotationsachse, wird ein gleichmäßiges Schmelzen des zweiten Materialstücks 3 und somit das ordnungsgemäße Durchführen des Verfahrens zur Herstellung der Plattierung 1 gewährleistet.

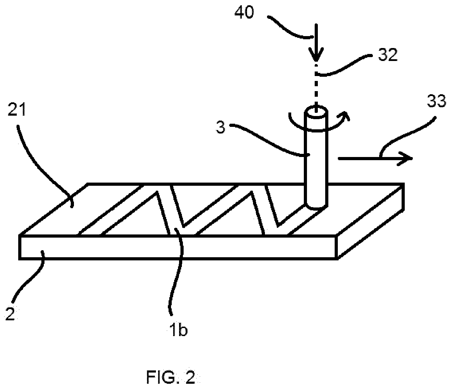

In Figur 2 ist schematisch eine weitere Ausführungsform eines erfindungsgemäßen Verfahrens zur Herstellung einer weiteren erfindungsgemäßen Plattierung 1 gezeigt. Bei diesem Verfahren wird das zweite Materialstück 3 entlang der Längsrichtung des ersten Materialstücks 2 über die Ebene 21 bewegt (siehe Pfeil 33). Ferner wird der Bewegung des zweiten Materialstücks 3 entlang der Längsrichtung eine Pendel- bzw. oszillierende Bewegung senkrecht dazu überlagert. Die daraus resultierende Plattierung 1 erstreckt sich somit mäander- oder zickzackförmig über die Ebene 21 des ersten Materialstücks 2. Es wird darauf hingewiesen, dass hier der Bewegung des zweiten Materialstücks 3 verschiedene Bewegungen überlagert werden können, die geeignet sind, das zweite Materialstück 3 während der linearen Bewegung entlang der Längsrichtung des ersten Materialstücks 2 in der Ebene in Querrichtung zu bewegen, so dass im Gegensatz zu der linearen Bewegung in Längsrichtung mehr zweites Material auf der Ebene aufgebracht und somit die Fläche der Plattierung 1 vergrößert wird.

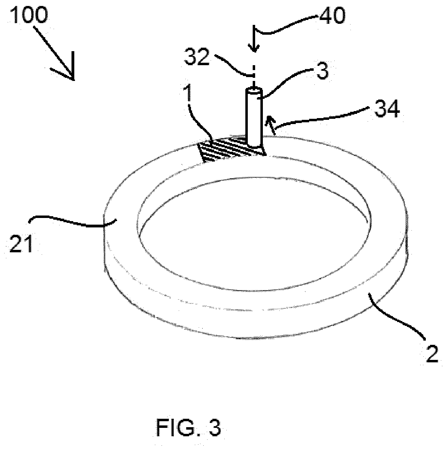

In Figur 3 ist schematisch eine Herstellung eines Übergangsbauteils 100 mit erfindungsgemäßer Plattierung 1 gezeigt. Das erste Materialstück 2 des Übergangsbauteils 100 ist ein Ring aus Stahl. Das zweite Materialstück 3 wird in radialer Richtung von Innen nach Außen über das erste Materialstück 2 bewegt (siehe Pfeil 34). Im Gegensatz zu der in Figur 1 gezeigten Plattierung 1, die Teil-Plattierungen 1a aufweist, wird der Abstand zwischen zwei Bewegungen des zweiten Materialstücks 3 derart gewählt, dass sich das jeweils geschmolzene Aluminium berührt und so eine gemeinsame Schmelze bildet. Diese gemeinsame Schmelze erstarrt beim Abkühlen und bildet eine einstückige Plattierung 1 auf der Ebene 21.

Das daraus resultierende Übergangsbauteil 100 weist auf der einen Seite das erste Materialstück 2 bzw. den Ring aus Stahl und auf der anderen Seite die Plattierung 1 aus Aluminium auf, wobei die Plattierung 1 fluiddicht und fest mit dem Ring aus Stahl verbunden ist. Auch hier kann die Schichtdicke durch Einstellen der auf das zweite Materialstück 3 wirkenden Kraft 40 sowie durch Einstellen des Winkels zwischen dem zweiten Materialstück 3 und der Ebene 21 des ersten Materialstücks 2 gesteuert werden.

Das erste Materialstück 2 aus Stahl kann beispielsweise mit einem Stahlrohr und die Plattierung 1 aus Aluminium mit einem Aluminiumrohr verschweißt werden, so dass das Übergangsbauteil 100 somit in kryogenen Anlagen, z.B. Wärmetauschern, verwendet werden kann, um einen fluiddichten Übergang von einem Stahlrohr zu einem Aluminiumrohr zu gewährleisten. Dies ist von Vorteil, da das Aluminiumrohr und das Stahlrohr nicht mittels Schmelzschweißen verbunden werden können. Das Übergangsbauteil 100 stellt somit einen Übergang zwischen einem Stahlrohr und Aluminiumrohr dar, wobei das Übergangsbauteil 100 kostengünstig und einfach hergestellt werden kann.

Es wird darauf hingewiesen, dass das zweite Materialstück 3 alternativ auch bogenförmig entlang des Umfangs des Rings über die Ebene 21 des ersten Materialstücks 2 bewegt werden kann, um die Plattierung 1 auf der Ebene 21 zu bilden.

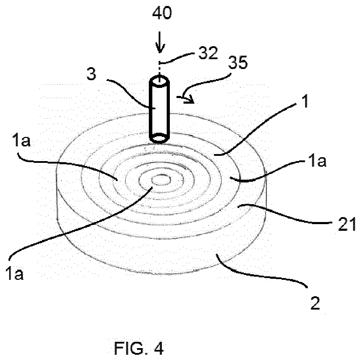

In Figur 4 ist schematisch eine Herstellung einer Platte mit erfindungsgemäßer Plattierung 1 gezeigt. Das erste Materialstück 2 bzw. die Platte ist eine Platte aus Stahl. Das zweite Materialstück 3 wird mit bogenförmiger Bewegung (siehe Pfeil 35) beispielsweise entlang konzentrischer Kreise, deren Radien von Innen nach Außen zunehmen, über die Ebene 21 des ersten Materialstücks 2 bewegt, so dass hier eine Vielzahl konzentrischer Teil-Plattierungen 1a gebildet werden. Die daraus resultierende Platte weist hier auf der Ebene 21 drei Teil-Plattierungen 1a aus Aluminium auf, wobei die Teil-Plattierungen 1a fluiddicht und fest mit der Platte aus Stahl verbunden sind. Auch hier kann die Schichtdicke der Teil-Plattierungen 1a durch Einstellen der auf das zweite Materialstück 3 wirkenden Kraft 40 sowie durch Einstellen des Winkels zwischen dem zweiten Materialstück 3 und der Ebene 21 des ersten Materialstücks 2 gesteuert werden.

Es wird darauf hingewiesen, dass das zweite Materialstück 3 alternativ auch spiralförmig entlang von Innen nach Außen oder von Außen nach Innen über die Ebene 21 des ersten Materialstücks 2 bewegt werden kann, um eine durchgängige spiralförmige Plattierung 1 auf der Ebene 21 zu bilden. Alternativ ist möglich, die Platte vollständig zu plattieren oder derart zu plattieren, dass beispielsweise ein äußerer Rand auf der Ebene 21 der Platte nicht von der Plattierung bedeckt ist. Insbesondere bei großen Platten wird bevorzugt, nur dort eine Plattierung aufzubringen, wo das zweite Materialstück 3 angeordnet werden soll. Dadurch kann zweites Material und somit Kosten gespart werden.

Die Platte bzw. das erste Materialstück 2 stellt beispielsweise einen Teil eines Rohrbodens für kryogene Anlagen, z.B. Wärmetauschern, insbesondere gewickelte Wärmetauscher und Core-in-Shell Wärmetauscher, oder eine Verbindungstelle zu bzw. in einer Coldbox, dar.

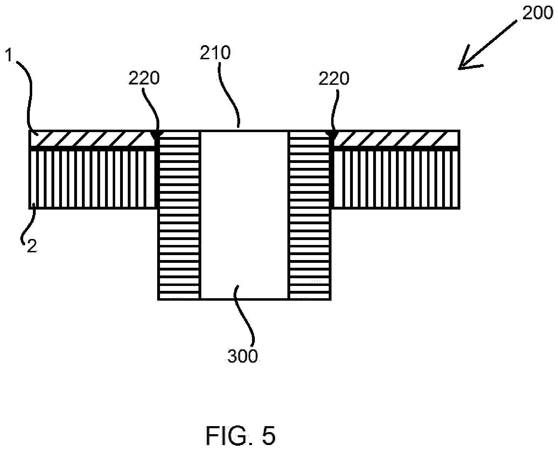

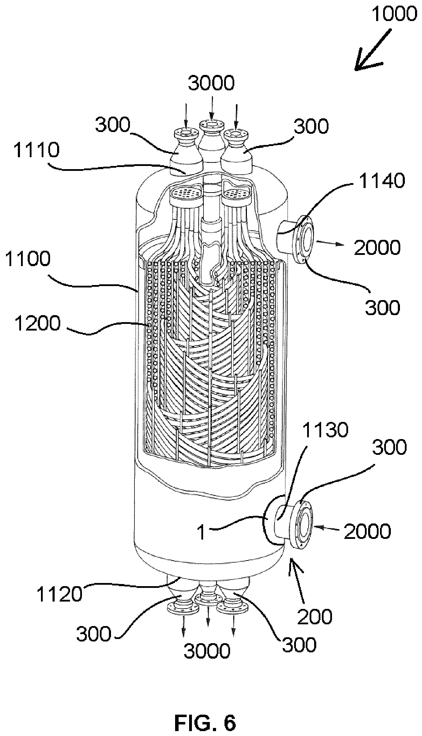

In Figur 5 ist schematisch ein erfindungsgemäßes Übergangsbauteil 200 gezeigt. Das Übergangsbauteil 200 als Bestandteil eines Rohrbodens für kryogene Anlagen, z.B. einen gewickelten Wärmetauscher (siehe Figur 6), wird hergestellt, indem die Plattierung 1, z.B. aus Aluminium, auf eine Seite des Rohrbodens bzw. des ersten Materialstücks 2, z.B. CrNi-Stahl, aufgebracht wird. Anschließend wird das erste Materialstück 2 mit einer Bohrung 210 versehen, wobei die Bohrung 210 ein Aluminiumrohr 300 aufnehmen kann. Dann wird ein Aluminiumrohr 300 in das zweite Materialstück 2 rückseitig zur Plattierungsseite hin eingefädelt. Das Aluminiumrohr kann inbesondere derart abgelängt werden, dass es bündig mit der Plattierungsoberfläche abschließt. Anschließend wird es mit der Plattierung 1 an Schweißstellen 220 verschweißt. Auf diese Weise können mehrere Hundert bis mehrere Tausend solcher Aluminiumrohre 300 durch entsprechende Bohrungen 210 zur Plattierungsseite des Rohrbodens durchgefädelt und dort artgleich verschweißt werden. Dies führt dazu, dass das Aluminiumrohr 300 mit der Plattierung 1 und über die Plattierung 1 auch fest mit dem ersten Materialstück 2 verbunden ist. Das Verschweißen stellt daüber hinaus eine 100%-ig kraftschlüssige Verbindung im Gegensatz zum Einwalzen dar. Das Übergangsbauteil 200 bzw. der Rohrboden kann beispielsweise in einen Druckmantel eines Wärmetauschers integriert werden, um einen fluiddichten Übergang von einem Aluminiumrohr 300 in das Innere eines Druckmantels eines Wärmetauschers zu gewährleisten, so dass kryogenes Fluid von dem Aluminiumrohr in den Druckmantel des Wärmetauschers geleitet werden kann.

Im Gegensatz zu aus dem Stand der Technik bekannten Rohrböden, bei denen beispielsweise ein Aluminiumrohr in eine Stahlplatte eingewalzt wird, ist die Verbindung zwischen Aluminiumrohr und Stahlplatte fluiddicht und fest und gewährleistet so die Einleitung von kryogenem Fluid in den Druckmantel, ohne dass die Verbindung zwischen Aluminiumrohr und Stahlplatte, beispielsweise durch thermische Kräfte auf Grund unterschiedlicher Wärmeausdehnungskoeffizienten, gelöst wird.

In Figur 6 ist schematisch ein gewickelter Wärmetauscher 1000 mit erfindungsgemäßem Übergangsbauteil 200 gezeigt. Der Wärmetauscher 1000 weist einen Druckmantel 1100, der ein flüssiges kryogenes Fluid 2000 aufnehmen kann, auf. Ferner sind in dem Druckmantel 1100 eine Vielzahl von Rohrbündeln 1200 angeordnet, die in einer Vielzahl von konzentrisch verlaufenden Schichten radial von Innen nach Außen übereinander angeordnet sind.

Die Rohrbündel 1200 sind ferner mit drei durch Einlassöffnungen 1110 hindurchtretenden Aluminiumrohren 300 verbunden, wobei die Rohrbündel 1200 derart gebündelt sind, dass jeweils ein Drittel der Rohrbündel 1200 mit einem der drei Aluminiumrohre 300 verbunden sind. Durch die Aluminiumrohre 300 kann beispielsweise ein gasförmiges Fluid 3000, das in den Rohrbündeln 1200 gegen das flüssige kryogene Fluid 2000, das im Inneren des Druckmantels 1100 aufgenommen ist, abgekühlt und/oder verflüssigt werden soll, in die Rohrbündel 1200 geleitet werden.

Das abgekühlte und/oder verflüssigte Fluid 3000 kann anschließend über Auslassöffnungen 1120, durch die ebenfalls drei Aluminiumrohre 300 hindurchgeführt sind, aus den Rohrbündeln 1200 geleitet werden. Die drei Aluminiumrohre 300 sind analog zu den Aluminiumrohren 300 an den Einlassöffnungen 1110 mit den Rohrbündeln 1200 verbunden.

Das flüssige kryogene Fluid 2000, das in dem Druckmantel 1100 des Wärmetauschers 1000 aufgenommen werden soll, wird ebenfalls über eine Einlassöffnung 1130 in den Druckmantel 1100 und über eine Auslassöffnung 1140 aus dem Druckmantel 1100 geleitet. Das Aluminiumrohr 300 an der Auslassöffnung 1140 wurde auf herkömmliche Weise in den Druckmantel 1100 des Wärmetauschers 1000 eingewalzt.

Im Gegensatz dazu weist der Druckmantel 1100 an der Einlassöffnung 1130 ein erfindungsgemäßes Übergangsbauteil 200, bspw. gemäß Figur 5, auf, das in den Druckmantel 1100 integriert ist, wobei nur das Aluminiumrohr 300 sowie die Plattierung 1 zu sehen sind. Dadurch wird an der Einlassöffnung 1130 eine feste und fluiddichte Verbindung des Aluminiumrohres 300 mit dem Druckmantel 1100 des Wärmetauschers 1000 bereitstellt.

Es wird darauf hingewiesen, dass das Übergangsbauteil 200 jedoch auch an der Ausgangsöffnung 1140 in den Druckmantel 1100 und/oder an der Einlassöffnung 1110 und/oder Auslassöffnung 1120 integriert werden könnte. Während bei einer Integration des Übergangsbauteils 200 in den Druckmantel 1100 an der Einlassöffnung 1130 und/oder an der Auslassöffnung 1140 das Aluminiumrohr 300 im Inneren des Druckmantels 1100 vorteilhafterweise nicht über den Druckmantel 1100 in das Innere des Wärmetauschers 1000 hineinragt, könnte beispielsweise an der Einlassöffnung 1110 und/oder an der Auslassöffnung 1120 eine Vielzahl Aluminiumrohre in dem Übergangsbauteil 200 vorgesehen sein, wobei jedes dieser Aluminiumrohre beispielsweise mit einem Rohrbündel 1200 verbunden werden könnte.

Auch wenn allgemein nur Plattierungen 1 gezeigt sind, die jeweils eine Schicht aufweisen, ist es beispielsweise ferner möglich, eine zweite oder eine Vielzahl Schichten aus Aluminium auf die Plattierung 1 aufzubringen. Alternativ könnten auch weitere Metalle als zusätzliche Schichten aufgebracht werden, so dass beim Aufbringen auf die Aluminiumplattierung Legierungen gebildet werden können.

Darüber hinaus ist es ferner möglich, dass das Übergangsbauteil auch in andere Wärmetauscher, beispielsweise Core-in-Shell Wärmetauscher, oder bei Coldboxen interiert werden kann, um eine feste und fluiddichte Verbindung von Aluminiumrohren zu Bauteilen aus (Edel-)Stahl zu gewährleisten.

## Patentansprüche

1. Verfahren zur Herstellung einer Plattierung (1), die mindestens eine Schicht aufweist, auf einer Ebene (21) eines ersten Materialstücks (2) einer chemischen oder verfahrenstechnischen Anlage, wobei das erste Materialstück (2) ein erstes Material aufweist, wobei die mindestens eine Schicht ein zweites Material aufweist, wobei das erste Material und das zweite Material nicht durch Schmelzschweißen miteinander verbindbar sind,
wobei die mindestens eine Schicht durch Aufreiben eines zweiten Materialstücks (3) aus dem zweiten Material durch Bewegen des zweiten Materialstücks (3) über die Ebene (21) des ersten Materialstücks (2) auf die Ebene (21) des ersten Materialstücks (2) aufgebracht wird.

2. Verfahren nach Anspruch 1, wobei das zweite Materialstück (3) beim Aufreiben mit einer vorbestimmten Kraft (40), die das zweite Materialstück (3) auf die Ebene (21) des ersten Materialstücks (2) drückt, aufgebracht wird.

3. Verfahren nach Anspruch 2, wobei das zweite Materialstück (3) durch die Kraft (40) kontinuierlich oder pulsierend auf die Ebene (21) des ersten Materialstücks (2) aufgebracht wird.

4. Verfahren nach Anspruch 2 oder 3, wobei eine Dicke der mindestens einen Schicht durch die Kraft (40) eingestellt wird.

5. Verfahren nach einem der vorstehenden Ansprüche, wobei das zweite Materialstück (3) beim Aufreiben auf die Ebene (21) des ersten Materialstücks (2) um eine Rotationsachse (32) des zweiten Materialstücks (3) in Rotation versetzt wird.

6. Verfahren nach Anspruch 5, wobei die Rotationsachse (32) des zweiten Materialstücks (3) in einem Winkel zu der Ebene (21) angeordnet wird.

7. Verfahren nach Anspruch 6, wobei als Winkel ein Winkel größer 0° bis 90°, bevorzugt 90°, eingestellt wird.

8. Verfahren nach einem der vorstehenden Ansprüche, wobei das zweite Materialstück (3) linear oder bogenförmig über die Ebene (21) des ersten Materialstücks (2) bewegt wird.

9. Verfahren nach Anspruch 8, wobei die lineare oder bogenförmige Bewegung des zweiten Materialstücks (3) mit einer Pendelbewegung oder einer oszillierenden Bewegung in der Ebene (21) überlagert wird.

10. Verfahren nach einem der vorstehenden Ansprüche, wobei als erstes Materialstück (2) eine Platte, eine Scheibe oder ein Ring verwendet wird.

11. Verfahren nach einem der vorstehenden Ansprüche, wobei als zweites Materialstück (3) ein Stift oder ein Stab verwendet wird.

12. Verfahren nach einem der vorstehenden Ansprüche, wobei als erstes Material Stahl oder Edelstahl verwendet wird.

13. Verfahren nach einem der vorstehenden Ansprüche, wobei als zweites Material Aluminium oder eine Aluminiumlegierung verwendet wird.

14. Übergangsbauteil (200) mit einem ersten Materialstück (2) und einer Plattierung (1), die mindestens eine Schicht aufweist, auf einer Ebene (21) des ersten Materialstücks (2) einer chemischen oder verfahrenstechnischen Anlage, wobei das erste Materialstück (2) ein erstes Material aufweist und die mindestens eine Schicht ein zweites Material aufweist, wobei das erste Material und das zweite Material nicht durch Schmelzschweißen miteinander verbindbar sind,
wobei die mindestens eine Schicht nach einem der Ansprüche 1 bis 13 auf der Ebene (21) des ersten Materialstücks (2) aufgebracht ist.

15. Rohrboden für einen Wärmetauscher (1000) mit einem Übergangsbauteil (200) nach Anspruch 14.
